# DEMANDE DE BREVET EUROPEEN

(11) **EP 1 321 707 A1**
(43) Date de publication de la demande: **25.06.2003**
(21) Numéro de dépôt: 02080212.0
(22) Date de dépôt: 10.12.2002
(51) Int. Cl.: F21V 21/04

(54) **Support de fixation, notamment pour luminaire encastrable**

(30) Priorité: 20.12.2001 FR 0116572
(71) Demandeur: Koninklijke Philips Electronics N.V., 5621 BA Eindhoven (NL)
(72) Inventeur: Faye, Nicolas, c/o Société Civile S.P.I.D., 75008 Paris (FR); Roblet, Arnaud, c/o Société Civile S.P.I.D., 75008 Paris (FR); Segret, Henribert, c/o Société Civile S.P.I.D., 75008 Paris (FR); Vernusset, Jean-Francois, Société Civile S.P.I.D., 75008 Paris (FR)
(74) Mandataire: Landousy, Christian

(57) **Abrégé**

La présente invention concerne un support de fixation. Le support de fixation (10) comportant une collerette (3), une patte de blocage (5), et un élément vertical (4), ladite patte (5) étant apte à être déplacée d'une position verrouillée vers une position déverrouillée. Il se caractérise en ce qu'il comporte une zone de guidage (8) de la patte de blocage (5), et qu'il est associé à une gâchette (6) destinée à maintenir la patte de blocage (5) dans sa position verrouillée et à déverrouiller ladite patte (5), et à un ressort (7) destiné à exercer une pression sur ladite patte de blocage (5) de telle sorte que lorsque cette dernière est en position déverrouillée, guidée par la zone de guidage (8) et par l'élément vertical (4), elle vient exercer une pression sur un faux-plafond (12).

Application : Luminaire encastrable

## Description

La présente invention concerne un appareil d'éclairage encastrable comprenant un support de fixation comportant une collerette, une patte de blocage et un élément vertical, la patte étant apte à être déplacée d'une position verrouillée vers une position déverrouillée.
Elle trouve une application particulière notamment pour les luminaires encastrés dans un faux plafond.

Le brevet japonais 10289615 décrit un luminaire comprenant :
- une patte apte à être déplacée d'une position verrouillée vers une position déverrouillée, la patte étant calée sur un élément vertical,
- une vis incluse dans ledit élément vertical,
- une première collerette, et
- une deuxième collerette.

Afin d'encastrer et de maintenir le luminaire dans un faux-plafond, on effectue les étapes suivantes. On introduit le luminaire dans un orifice situé dans le faux-plafond. On fait tourner la vis de 90° avec un tournevis afin de débloquer la patte de sa position verrouillée vers sa position déverrouillée. Par la suite, on dévisse la vis afin de faire descendre la patte, la patte étant guidée par l'élément vertical. On dévisse complètement jusqu'à ce que la patte arrive en butée sur la première collerette. La patte appuie sur la première collerette. Le faux plafond est alors pris entre la première collerette qui se trouve à l'intérieur du faux-plafond et la deuxième collerette qui se trouve à l'extérieur du faux-plafond. Le luminaire est ainsi fixé.
L'inconvénient majeur d'un tel luminaire réside dans le fait qu'il faut trop d'efforts et de temps pour installer un luminaire. En effet, il faut notamment dévisser complètement la vis.

Aussi un problème technique à résoudre par la présente invention est de proposer un appareil d'éclairage encastrable comprenant un support de fixation, le support comportant une collerette, une patte de blocage, et un élément vertical, ladite patte étant apte à être déplacée d'une position verrouillée vers une position déverrouillée, ainsi qu'un tel support de fixation, qui permettent d'installer un tel appareil rapidement et sans trop d'efforts.
Une solution au problème technique posé se caractérise en ce que l'appareil d'éclairage comporte une gâchette destinée à maintenir la patte de blocage dans sa position verrouillée et à déverrouiller ladite patte, une zone de guidage de la patte de blocage, et un ressort destiné à exercer une pression sur ladite patte de blocage de telle sorte que lorsque cette dernière est en position déverrouillée, guidée par la zone de guidage et par l'élément vertical, elle vient exercer une pression sur un faux-plafond.
Selon un second objet de la présente invention, cette solution se caractérise, en ce que le support de fixation comporte une zone de guidage de la patte de blocage, et en ce qu'il est associé à une gâchette destinée à maintenir la patte de blocage en position verrouillée et à déverrouiller ladite patte, et à un ressort destiné à exercer une pression sur ladite patte de blocage de telle sorte que lorsque cette dernière est en position déverrouillée, guidée par la zone de guidage et par l'élément vertical, elle vient exercer une pression sur un faux-plafond.

Ainsi, comme on le verra en détail plus loin, la gâchette bloque la patte de blocage en position verrouillée et permet de libérer sans efforts la patte de blocage lorsqu'on exerce une pression sur ladite gâchette. Par la suite, ladite patte vient se plaquer automatiquement sur le faux-plafond grâce au ressort qui exerce une pression sur la patte. En conséquence, ledit faux-plafond se trouve maintenu entre ladite patte et la collerette. L'appareil d'éclairage est fixé.

La description qui suit, en regard des dessins annexés, le tout donné à titre d'exemples non limitatifs, fera bien comprendre en quoi consiste l'invention.
- la Fig. 1 est une vue globale d'un appareil d'éclairage selon l'invention,
- la Fig. 2 est une première représentation partielle d'un appareil d'éclairage de la figure 1, lorsqu'il n'est pas fixé sur un faux-plafond,
- la Fig. 3a illustre une patte de blocage vue de profil, élément de l'appareil d'éclairage de la figure 1,
- la Fig. 3b illustre une patte de blocage ensemble une gâchette en vue de haut, éléments de l'appareil d'éclairage de la figure 1,
- la Fig. 4 illustre un ressort, élément de l'appareil d'éclairage de la figure 1,
- la Fig. 5 illustre une gâchette, élément de l'appareil d'éclairage de la figure 1,
- la Fig. 6 est une deuxième représentation partielle de l'appareil d'éclairage selon l'invention, en position intermédiaire, et
- la Fig. 7 est une troisième représentation partielle de l'appareil d'éclairage selon l'invention, lorsqu'il est fixé sur un faux-plafond.

Le présent exposé de l'invention a trait à un exemple de luminaire encastrable dans un faux-plafond.

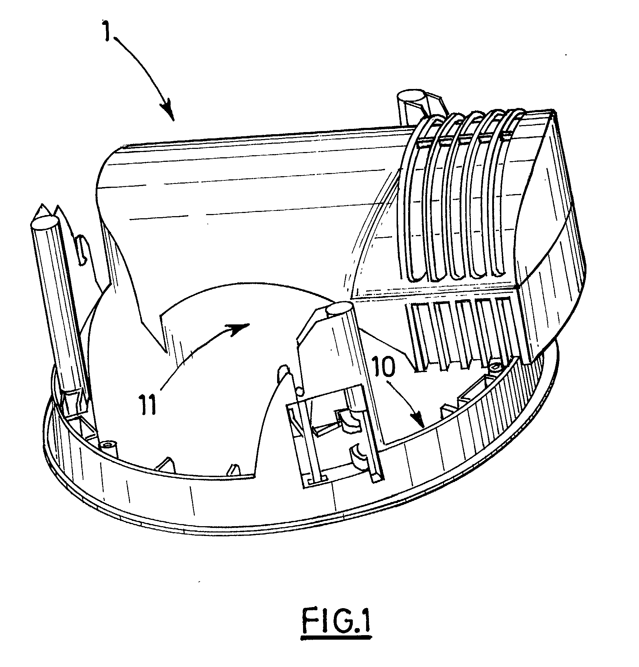

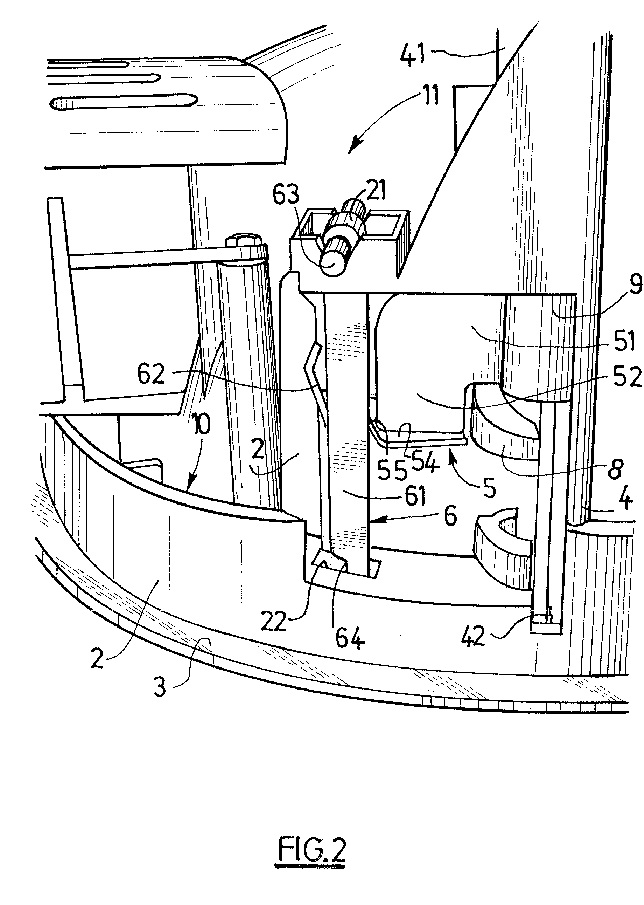

Tel que représenté sur la figure 1, le luminaire 1 comprend un réflecteur 11 monté sur un support de fixation 10 de préférence amovible. Le montage du réflecteur 11 sur le support 10 est réalisé de manière connue de l'homme du métier et n'est donc pas décrit ici. Comme le montre la figure 2, le support de fixation 10 est de préférence cylindrique et comporte :
- une embase 2, ladite embase comprenant une rainure 22,
- une collerette 3,
- une patte de blocage 5,
- un élément vertical 4,
- une zone de guidage 8 comprenant une pente, et
- des moyens de maintien 21 d'une gâchette.

La zone de guidage 8 du support de fixation 10 est fabriquée, de préférence, dans un matériau plastique ou métallique. Sa pente permet d'entraîner un déplacement de la patte de blocage 5 et de la guider lorsqu'elle est en position déverrouillée.

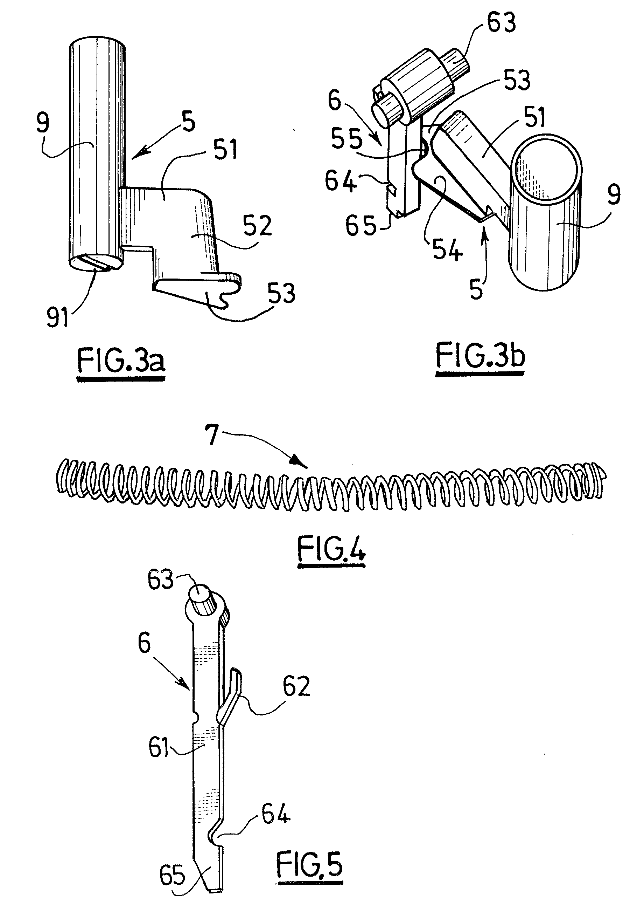

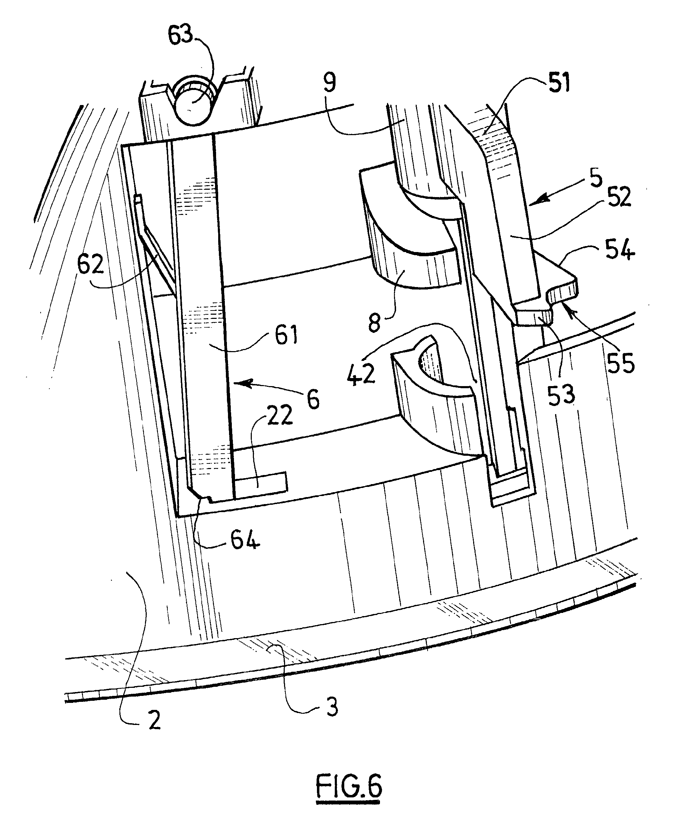

La collerette 3 est fabriquée de préférence dans un matériau plastique ou métallique. Elle sert d'interface entre l'appareil d'éclairage 1 et le faux-plafond.
La patte de blocage 5 est représentée à la figure 3a en vue de profile. Elle est fabriquée de préférence dans un matériau plastique ou métallique. Elle comprend une partie horizontale 51 reliée à une partie verticale 52, elle-même reliée à un biais 53. Préférentiellement, elle comporte également un appui 54, et il existe un décrochement 55 entre le biais 53 et l'appui 54, comme le montre la vue de haut de la figure 3b. Les quatre éléments cités 51, 52, 53 et, le cas échéant, 54, forment de préférence un ensemble solidaire et sont moulés ensemble. La patte de blocage 5 permet d'appuyer sur le faux-plafond.
L'élément vertical 4 est préférentiellement un puits non plein comprenant un logement 41 et une fente 42 comme indiqué à la figure 2. Ledit élément vertical 4 est fixé sur la collerette 3 qui le maintient. Il est fabriqué de préférence dans un matériau plastique ou métallique. Il permet de guider verticalement la patte de blocage 5 au moyen de sa fente 42. Il permet également d'accueillir un ressort 7 dans son logement 41 et de le maintenir verticalement.
Le ressort 7 est préférentiellement en acier. Il est représenté à la figure 4. Il permet de pousser sur la patte de blocage 5. Il est relié à la patte 5 par l'intermédiaire d'un bossage de centrage 9 montré à la figure 3a. Le ressort 7 est préférentiellement inséré dans ledit bossage 9.

Ledit bossage de centrage 9 comprend une empreinte 91 destinée à accueillir un outil tel qu'une tête de tournevis. Préférentiellement, le bossage de centrage 9 est moulé également avec les autres éléments de la patte 5.
Le luminaire 1 comprend également une gâchette 6 représentée sur la figure 5. La gâchette 6 est de préférence fabriquée dans un matériau plastique. Elle comporte un tronc vertical 61, une languette 62 située de préférence à peu près au milieu du tronc, un axe 63 situé de préférence en haut de la gâchette, une gorge 64 située de préférence en bas du tronc 61 du même côté que la languette 62, et un levier 65 qui correspond à la partie basse de la gâchette. Le levier 65 a par exemple comme dimensions 2mmx2mm, tandis que le tronc vertical 61 a par exemple comme dimensions 5mmx2mm.
La gâchette 6 permet de bloquer la patte de blocage 5 et également de la déverrouiller.

Préférentiellement, la collerette 3, le puits non plein vertical 4 et la zone d'appui 8 forment un seul ensemble solidaire avec l'embase 2 du support de fixation 10 et sont tous moulés ensemble. Cela présente l'avantage de diminuer le coût de l'appareil d'éclairage : on n'utilise aucun moyen de fixation entre ses éléments. De plus, cela présente l'avantage d'avoir, regroupés dans une seule masse, différentes fonctions correspondant à la collerette 3, au puits non plein vertical 4, à la zone d'appui 8 et à l'embase 2 du support de fixation 10. Cette masse pourra être réutilisée en association avec la gâchette 6 et le ressort 7 dans d'autres applications telles qu'une application de baffles nécessitant une fixation de haut-parleurs sur un support de fixation amovible, le haut-parleur remplaçant dans ce cas le réflecteur 11.

Afin de fixer le luminaire 1 dans le faux-plafond, on effectue les étapes suivantes.
Dans une première étape, la gâchette 6 est introduite dans le support de fixation 10 verticalement. Elle est maintenue à la verticale par ledit support 10 grâce aux moyens de maintien 21 qui sont ici un clip haut, grâce à la languette 62 et à la rainure 22 de l'embase 2. L'axe 63 de la gâchette est clipé dans le clip haut 21 dont le diamètre est sensiblement supérieur à celui dudit axe 63, ledit clip permettant de maintenir la gâchette 6. La masse de la gâchette 6 comprenant la gorge 64 de la gâchette vient, préférentiellement, reposer sur la rainure 22 du côté opposé à ladite gorge 64 et à ladite languette 62. La languette 62 de la gâchette 6 est plaqué contre une partie verticale de l'embase 2 du support de fixation 10. Elle permet d'exercer un effort de pression contre cette partie verticale de l'embase 2, ce qui permet de maintenir la gâchette en pression, la masse de la gorge 64 de la gâchette 6 exerçant de son côté un effort de pression contraire sur la rainure 22 de l'embase 2, dans le cas où ladite masse reposerait sur la rainure 22. La gâchette 6 est en position de repos.

On fait bien attention de positionner le biais 53 de la patte de blocage 5 derrière la gâchette 6, le décrochement 55 entre le biais 53 et l'appui 54 de la gâchette permettant d'avoir de la place pour que la gâchette puisse se positionner, comme on peut le voir sur la figure 3b. La patte de blocage 5 se trouve ainsi en position verrouillée.
Comme le montre la figure 2, dans cette position verrouillée, le biais 53 de la patte 5 est calé derrière le tronc vertical 61 de la gâchette 6, tandis que la partie horizontale 51 est calée sur la zone de guidage 8, et ladite patte 5 est rentrée à l'intérieur de l'embase 2 du support de fixation 10. Le ressort 7 est comprimé et se trouve dans le logement 41 du puits non plein 4 ainsi que le bossage de centrage 9.

Dans une deuxième étape, on encastre le luminaire 1 dans un orifice (non représenté) de forme adaptée, réalisé dans le faux-plafond, la collerette 3 restant à l'extérieur du faux-plafond.

Dans une troisième étape, on actionne le levier 65 de la gâchette 6 en exerçant un effort en poussée et en translation, ici vers la gauche, sur ledit levier 65, par exemple avec un doigt. En conséquence, l'axe 63 de la gâchette 6 effectue une rotation selon un axe horizontal au clip21, ici sur la droite, la gorge 64 se dirige vers le côté gauche de la rainure 22 de l'embase 2, et la languette 62 de la gâchette 6 se rapproche du tronc 61 de la gâchette, ledit tronc étant également poussé vers la gauche, i.e. vers la partie verticale de l'embase 2 du support de fixation 10.
Ainsi, cet effort en poussée et en translation permet de pousser la gâchette 6 sur la gauche de sorte que le biais 53 de la patte de blocage 5 se trouve libéré de ladite gâchette 6. Toute la patte de blocage 5 est par suite déverrouillée.
On notera que la gorge 64 a comme avantage de fournir un plus grand débattement pour la gâchette, ladite gâchette s'encastrant par l'intermédiaire de la gorge dans la rainure 22 de ladite embase 2, ce qui permet de libérer plus facilement le biais 53 et par suite la patte de blocage 5, comme le montre la figure 6.

Dans une quatrième étape, ladite patte de blocage 5 effectue une rotation, ici vers la droite, par rapport à un axe vertical du bossage de centrage 9. En parallèle, le ressort 7 qui exerce une pression permanente sur la patte de blocage 5 au moyen du bossage de centrage 9, fait glisser la patte de blocage 5 sur la pente de la zone de guidage 8, ladite pente entraînant alors le déplacement de ladite patte 5 vers le bas. Cette pente de la zone de guidage 8 a pour avantage de faire glisser très rapidement la patte de blocage 5.

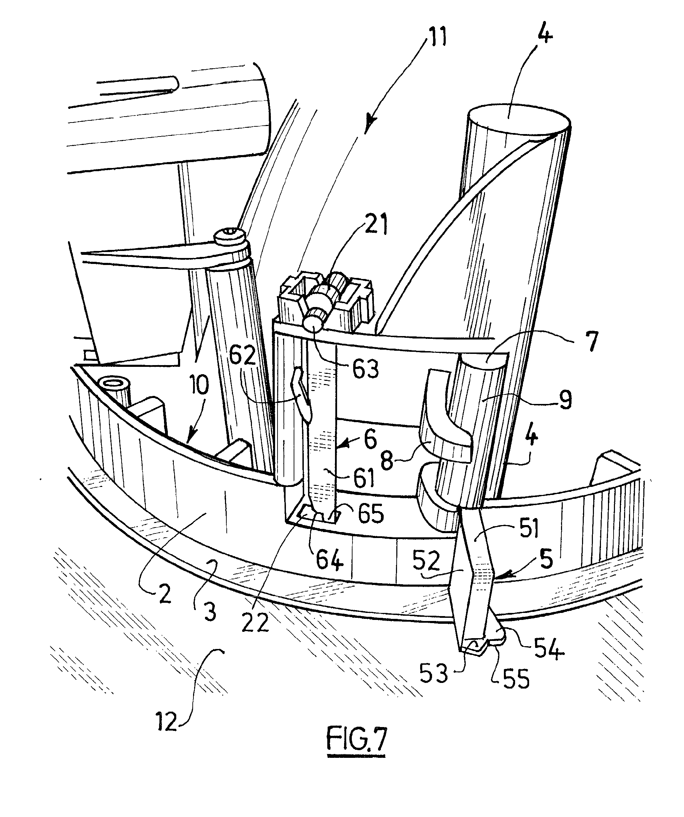

Comme le montre la figure 6, la patte de blocage 5 est alors dans une position intermédiaire. La partie horizontale haute 51 et la partie verticale basse 52 ainsi que le biais 53 et l'appui 54 de la patte de blocage 5 se retrouvent de ce fait à l'extérieur de l'embase 2.
La patte de blocage 5 glisse alors le long de la fente 42 du puits 4 qui permet de maintenir ladite patte 5 perpendiculairement au faux-plafond. La patte de blocage 5 termine sa course sur le faux-plafond 12, comme le montre la figure 7.
Ainsi, la patte de blocage 5 est complètement déverrouillée et son biais 53 ainsi que son appui 54 sont plaqués sur le faux-plafond. L'appui 54 permet d'avoir une plus grande surface de contact avec le faux-plafond 12 par rapport au biais 53 et par suite une plus grande surface de pression.
Ladite patte 5 exerce ainsi une pression sur le faux plafond 12 de sorte que ce dernier est maintenu entre la collerette 3 et la patte de blocage 5, la collerette permettant une tenue de l'ensemble du luminaire 1 contre le faux-plafond.

Dans une dernière étape, lorsqu'on lâche la gâchette, elle revient dans sa position de repos, la languette 62 exerçant de nouveau une pression contre la partie verticale de l'embase 2 du support de fixation 10, et la masse de la gorge 64 de la gâchette 6 exerçant un effort de pression contraire contre la rainure 22 de ladite embase 2, du côté opposé à la gorge 64 et à la languette 62, dans le cas où ladite masse reposerait sur ladite rainure 22.
Ainsi, la languette 62 permet un retour automatique de la gâchette 6 à sa position de repos après que l'on a exercé une pression en poussée et en translation sur ladite gâchette 6.
Pour désinstaller le luminaire 1, par exemple lorsqu'il faut changer un composant tel qu'une douille ou un ballast dudit luminaire, on insère un outil tel qu'un tournevis dans la partie inférieure du puits non plein 4 du support de fixation 10 et on place la tête de cet outil dans l'empreinte 91 du bossage de centrage 9 qui est relié à la patte de blocage 5 et au ressort 7. A l'aide du tournevis, on exerce un effort de pression sur le ressort 7 par l'intermédiaire du bossage de centrage 9 en appuyant sur ledit bossage 9. On pousse vers le haut jusqu'à ce que l'emprunte 91 du bossage de centrage 9 se trouve au-dessus de la pente de la zone de guidage 8. Par la suite, on tourne de 90°, ici vers la gauche, la patte de blocage 5 vers l'intérieur de l'embase 2 pour la réarmer. En conséquence, on appuie sur la gâchette 6 au moyen du biais 53 de ladite patte 5, ce qui a pour effet de repousser la gâchette 6 vers la gauche, vers la partie verticale de l'embase 2 du support de fixation 10. Le biais 53 se place alors derrière ladite gâchette 6, cette dernière revenant en position bloquée grâce à la languette 62 qui exerce un effort de pression inverse en translation vers la droite contre l'embase 2. La patte de blocage 5 est ainsi verrouillée. On retire le tournevis, la patte de blocage repose alors sur le haut de la pente de la zone de guidage 8.

Le ressort 7 est ainsi réarmé grâce au bossage de centrage 9 et l'on peut sans problèmes désinstaller le luminaire 1 du faux-plafond 12 sans détériorer ce dernier ou une partie du luminaire 1 ou encore une partie de son support 10. On pourra également réinstaller sans dommages ledit luminaire 1 comme décrit auparavant.

Bien entendu, le cadre de l'invention n'est nullement limité aux modes de réalisation décrits ci-dessus et des variations ou modifications peuvent y être apportés sans pour autant s'écarter de l'esprit et de la portée de l'invention. L'objet de l'invention s'étend, par exemple, à d'autres modes de réalisation dans lesquels, par exemple, d'autres formes pour l'élément vertical 4 sont utilisées ou d'autres matériaux sont utilisés.

Bien entendu, le support de fixation, objet de l'invention, n'est nullement limité à l'application décrite ci-dessus, et s'étend, par exemple, à d'autres applications telles que des baffles de haut-parleurs.

Aucun signe de référence dans le présent texte ne doit être interprété comme limitant ledit texte.
Le verbe "comprendre" et ses conjugaisons ne doivent également pas être interprétés de façon limitative, i.e. ils ne doivent pas être interprétés comme excluant la présence d'autres étapes ou éléments outre ceux définis dans la description, ou encore, comme excluant une pluralité d'étapes ou d'éléments déjà listés après ledit verbe et précédés de l'article "un" ou "une".

## Revendications

1. Appareil d'éclairage encastrable (1) comprenant un support de fixation (10), le support comportant une collerette (3), une patte de blocage (5), et un élément vertical (4), ladite patte (5) étant apte à être déplacée d'une position verrouillée vers une position déverrouillée, **caractérisé en ce qu'**il comporte une gâchette (6) destinée à maintenir la patte de blocage (5) dans sa position verrouillée et à déverrouiller ladite patte (5), une zone de guidage (8) de la patte de blocage (5), et un ressort (7) destiné à exercer une pression sur ladite patte de blocage (5) de telle sorte que lorsque cette dernière est en position déverrouillée, guidée par la zone de guidage (8) et par l'élément vertical (4), elle vient exercer une pression sur un faux-plafond (12).

2. Appareil d'éclairage encastrable (1) selon la revendication 1, **caractérisé en ce que** la gâchette (6) comprend une languette (62) et un axe (63) destinés à maintenir ladite gâchette en position verticale.

3. Appareil d'éclairage encastrable (1) selon la revendication 2, **caractérisé en ce que** la languette (62) permet en outre un retour automatique de la gâchette (6) à une position de repos après avoir exercé une pression en poussée et en translation sur ladite gâchette.

4. Appareil d'éclairage encastrable (1) selon la revendication 1, **caractérisé en ce que** la gâchette (6) comprend en outre une gorge (64) permettant un débattement plus grand.

5. Appareil d'éclairage encastrable (1) selon la revendication 1, **caractérisé en ce que** la patte de blocage (5) comporte un biais (53), un appui (54) et un décrochement (55) entre ledit biais (53) et ledit appui (54).

6. Appareil d'éclairage encastrable (1) selon la revendication 1, comprenant en outre une embase (2), **caractérisé en ce que** la collerette (3), l'élément vertical (4) et la zone d'appui (8) forment un ensemble solidaire avec ladite embase (2).

7. Appareil d'éclairage encastrable (1) selon la revendication 1, **caractérisé en ce qu'**il comporte en outre un bossage de centrage (9) reliant la patte (5) à un ressort (7), ledit bossage (9) permettant un réarmement dudit ressort (7).

8. Support de fixation (10) comportant une collerette (3), une patte de blocage (5), et un élément vertical (4), la patte (5) étant apte à être déplacée d'une position verrouillée vers une position déverrouillée, **caractérisé en ce qu'**il comporte une zone de guidage (8) de la patte de blocage (5), et **en ce qu'**il est associé à une gâchette (6) destinée à maintenir la patte de blocage (5) en position verrouillée et à déverrouiller ladite patte (5), et à un ressort (7) destiné à exercer une pression sur ladite patte de blocage (5) de telle sorte que lorsque cette dernière est en position déverrouillée, guidée par la zone de guidage (8) et par l'élément vertical (4), elle vient exercer une pression sur un faux-plafond (12).

9. Support de fixation (10) selon la revendication 8, **caractérisé en ce que** la gâchette (6) comprend une languette (62) et un axe (63) destinés à maintenir ladite gâchette en position verticale.

10. Support de fixation (10) selon la revendication 9, **caractérisé en ce que** la languette (62) permet en outre un retour automatique de la gâchette (6) à une position de repos après avoir exercé une pression en poussée et en translation sur ladite gâchette.

11. Support de fixation (10) selon la revendication 8, **caractérisé en ce que** la gâchette (6) comprend en outre une gorge (64) permettant un plus grand débattement.

12. Support de fixation (10) selon la revendication 8, **caractérisé en ce que** la patte de blocage (5) comporte un biais (53), un appui (54) et un décrochement (55) entre ledit biais (53) et ledit appui (54).

13. Support de fixation (10) selon la revendication 8, comprenant en outre une embase (2), **caractérisé en ce que** la collerette (3), l'élément vertical (4) et la zone d'appui (8) forment un ensemble solidaire avec ladite embase (2).

14. Support de fixation (10) selon la revendication 8, **caractérisé en ce qu'**il comprend en outre un bossage de centrage (9) reliant la patte (5) à un ressort (7), ledit bossage (9) permettant un réarmement dudit ressort (7).
